# EUROPÄISCHE PATENTSCHRIFT

(11) **EP 1 751 461 B1**
(45) Veröffentlichungstag und Bekanntmachung des Hinweises auf die Patenterteilung: **10.03.2010**
(21) Anmeldenummer: 04735549.0
(22) Anmeldetag: 01.06.2004
(51) Int. Cl.: F16L 37/098

(54) **LÖSBARE KLEMM- UND VERBINDUNGSVORRICHTUNG FÜR ROHRE, SCHLÄUCHE, STANGEN ODER DER GLEICHEN**
DETACHABLE CLAMPING AND CONNECTING DEVICE FOR PIPES, HOSES, RODS OR SIMILAR
DISPOSITIF DE SERRAGE OU DE CONNEXION AMOVIBLE DESTINE A DES TUYAUX, DES TUYAUX FLEXIBLES, DES BARRES OU SIMILAIRES

(43) Veröffentlichungstag der Anmeldung: 14.02.2007
(73) Patentinhaber: Rudolf Riedel - KMT GmbH, 08233 Treuen / Vogtland (DE)
(72) Erfinder: PASBRIG, Max, CH-6644 Orselina (CH)
(74) Vertreter: Kötter, Ulrich
(86) Internationale Anmeldenummer: PCT/CH2004/000328
(87) Internationale Veröffentlichungsnummer: WO 2005/119114

(56) Entgegenhaltungen:
- FR-A- 874 879
- GB-A- 809 094
- US-A- 3 523 553
- US-A- 5 171 045

## Beschreibung

Die Erfindung betrifft eine lösbare Klemm- und Verbindungsvorrichtung , gemäss dem Oberbegriff des Patentanspruches 1. Eine derartige Vorrichtung ist beispielsweise aus der US 5,171,045 bekannt.

Ausgehend vom bekannten Stand der Technik, ist es Aufgabe der Erfindung, eine lösbare Klemm- und Verbindungsvorrichtung nach der im Oberbegriff des Patentansruches 1 angegebenen Art in soweit zu verbessern, dass ein sicheres Festklemmen, Verbinden und Lösen von Teilen unterschiedlicher Durchmesser und Bauert und beim Verbinden der Teile ein öffnen und beim Lösen der Teile ein Schliessen des Durchflusskanals sowie eines Ventils möglich und gewährleistet ist.

Nach einer vorteilhaften Ausgestaltung ist eine Vorrichtung zum öffnen und schliessen des Durchflusskanals vorgesehen, um beim Verbinden oder lösen der Teile den Durchfluss von Flüssigkeiten abzustellen.

Nach einer vorteilhaften Ausgestaltung ist vorgesehen, im Innenteil eine in axialer Richtung verschiebbare Ventileinrichtung so anzuordnen, dass ein öffnen und schliessen des Ventils durch das angeordnete Innenrohr möglich ist.

Nach einem vorteilhaften Merkmal der Erfindung , ist ein Adapter als Verbindungsteil mit einem Schlauch oder als Kupplungsteil mit einer anderen Kupplungsvorrichtung vorgesehen. Der Aussenteil des Adapters weist vier Durchmesserstufen auf. Eine mit Gewinde zur Befestigung mit dem Aussenteil der Klemmvorrichtung, eine zweite mit einem Vielkannt zum Ansetzen eines Werkzeuges, eine Dritte mit einer umlaufenden Vertiefung für die Klemmteile und eine Vierte mit einer Nut zur Aufnahme einer Dichtung.

Nach einem weiteren Merkmal der Erfindung, können alle Teile der Klemm- und Verbindungsvorrichtung, bis auf die Feder und der Dichtungsringe aus Kunststoff bestehen, wass viele Vorteile hat. Es ist auch möglich, diese aus verschiedenen Materialien, je nach Anwendungsbereich, zu fertigen.

Ausführungsbeispiele der Erfindung werden nachstehend anhand der Zeichnung näher erläutert. (Die römischen Ziffern vor den Bezugsziffern weisen auf die zugehörige Figur hin). in dieser zeigt
- Fig.1:: einen Längsschnitt durch eine erste Ausführungsform einer lösbaren Klemm- und Verbindungsvorrichtung.
- Fig.2:: einen Längsschnitt durch eine zweite Ausführungsform einer lösbaren Klemm- und Verbindungsvorrichtung,
- Fig.3:: einen Längsschnitt durch eine dritte Ausführungsform einer lösbaren Klemm- und Verbindungsvorrichtung,
- Fig.4:: einen Längsschnitt durch eine vierte Ausführungsform einer lösbaren Klemm- und Verbindungsvorrichtung,
- Fig.5:: einen Längsschnitt durch eine fünfte Ausführungsform einer lösbaren Klemm- und Verbingsvorrichtung.

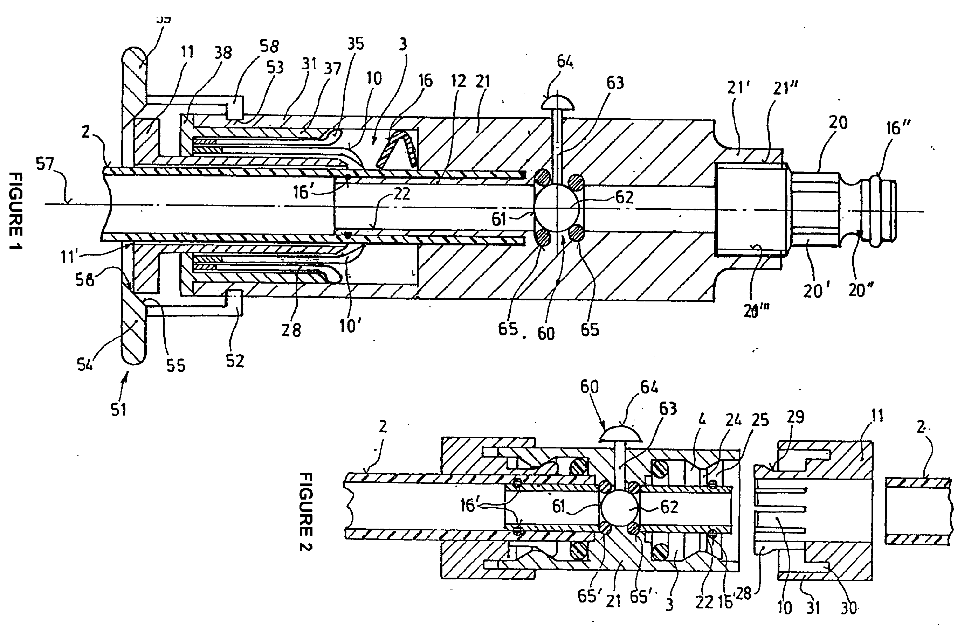

Die in Fig. 1 dargestellte lösbare Klemm- und Verbindungsvorrichtng besteht aus einem gehäuseartigen Rohrstück I.21, das an seinem in der Zeichnung rechts dargestellten Ende mit einem Adapter zur Verbindung mit einem anderen Verbindungsteil versehen ist. Der Adapter I.20 ist an seinem verstärkten Teil I.20" mit dem Gehäuseteil I.21' mit Gewinde I.21 "verbunden und ist mit einem Vielkannt I.20' einer Umfangrille für Klemmnocken und einem Dichtungsring I.16" versehen. Das in der Zeichnung links dargestellte Ende des Rohrstück I.21 ist mit mit einer zylindrischen Kammer I.3 versehen in der ein Dichtring I.16 und ein ringförmiges Einsatzstück I.37 mit Rand I.38 angeordnet ist. Im Einsatzstück. I.37 ist ein mit Schlitzen durchsetztes Ringteil I.28 mit an die Wandung der Kammer I.3 gerichteten Abkröpfungen I.35 und ein Klemmrohrstück I.10 mit in Richtung des Rohrfortsatzes I.22 gerichteten federnden Zungen I.10 sowie die Hülse I.11' des Betätigungsteil I.11 verschieblich angeordnet. Die Hülse I.11 ist mit einem Durchtrittskanal für das Rohr, Schlauch I.2 oder der gleichen versehen. Mit dem Gehäuserohrstück I.21 ist ein Tragring I.51 lösbar verbunden. Der Tragring I.51 ist einstückig mit Entriegelungsteilen I.54 versehen. Durch diese Entriegelungsteile I.54, die an dem Betätigungsteil I.11 des Klemmrohrstücks I.10 angreifen, ist das Klemmrohrstück, I.20 in das Gehäuserohrstück I.21 hineinverschiebbar. Es sind zwei einander diametral gegenüberliegende Entriegelungsteile I.54 vorgesehen. Jedes Entriegelungsteil I.54 besitzt eine zum Austrittsquerschnitt des Kanals hinweisende Keilfläche I.55, die auf dEr äusseren Ringkante I.54 des Betätigungsteils I.11 des Klemmrohrstücks I.10 derart aufliegt, dass durch die Bewegung des Enriegelungsteils I.54 zur Mittelachse I.57 hin das Klemmrohrstück I.10 in das Gehäuserohrstück I.21 hineinverschoben wird. Durch einen Druck auf die Entriegelungsteile I.54 in Richtung zur Mittelachse I.57 kann die Rohr-Schlauchverbindung auf einfache Weise entriegelt werden. In Richtung der Kammer I.3 ist das Gehäuserohrstück I.21 mit einer Ausnehmung I.12 für die Aufnahme des Rohr, Schlauch oder dergleichen versehen.

In der Mitte des Gehäuserohrstück I.21 ist eine Mediumdurch flusssperre I.60 angeordnet die aus den beweglichen Teilen I.61, I.63, I.64 und den O-Ringen I.65 besteht. Mit dieser Vorrichtung kann der Mediumdurchflusskanal I.62 bei Bedarf geöffnet oder geschlossen werden.

Die Ausführungsform Fig. 2 besteht aus dem Rohrteil II.21 mit in deren Mitte angeordneten Rohrfortsätzen II.2 die im Bereich der Enden des Rohrteils II.21 enden. Der Aussendurchmesser der Rohrfortsätze II.22 entspricht den Innendurchmesser der anzuschliessenden Rohre, Schläuche II.2. Diese zentrallen Rohrfortsätze II.22 bilden daher Widerlagerflächen gegen die die federnden Zungen II.10 des Klemmrohrstücks II.10 den festzuklemmenden Rohr-Schlauchandrückt. Das Klemmrohrstück II.10 ist mit einer Ausnehmung II.30 zur Verbindung mit den Enden des Rohrteils II.21 und mit Segmenten II.28 mit rückseitigen konusförmigen Schrägen II.29 und Federnden Zungen II.10 versehen, die im eingeschobenen Zustand mit den konusförmigen Abschnitt II.4 der Kammer II.3 des Rohrteils II.21 zusammenwirken. In der Mitte des Rohrteils II.21 ist im Mediumdurchflusskanal II.62 eine Durchflusssperre II.60 angeordnet die aus den beweglichen Teilen II.61, II.63, II.64 und den O-Ringen II.65 besteht.

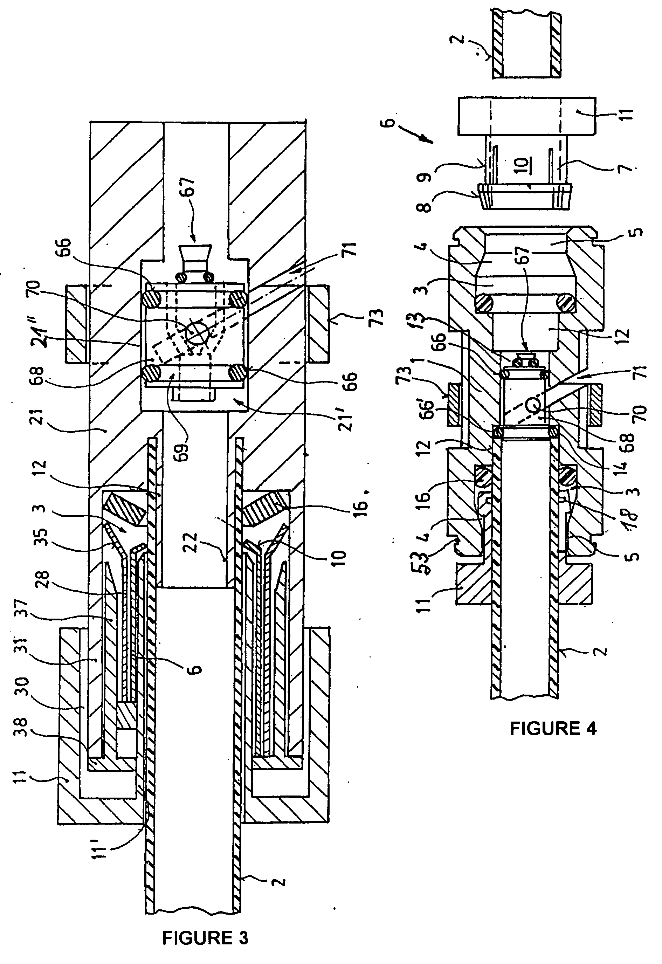

Die Ausführungsform Fig.3 besteht aus dem Gehäuse III.21 mit einer zylindrischen Kammer III.3 mit in deren Mitte angeordneten Rohrteil III.22 und einer Ausnehmung III.12 für die zuverbindenden Rohre, Schläuche oder der gleichen. In der Kammer III.3 ist ein Dichring III.16 und ein ringförmiges Einsatzstück III.37 mit Rand III.38. Im Einsatzstück ist ein mit Schlitzen durchsetstes Ringteil III.28 mit an die Innen wandungen der Kammer III.3 gerichteten Abkröpfungen III.35 und ein Klemmrohrstück III.6 mit in Richtung des Rohrteils III.22 gerichteten Teil III.10 Mit der am Ende der Kammer III.3 verschieblich angeordneten Betäti-Betätigungshülse III.11 wird das Klemmrohrstück III.6 bewegt und das Klemmteil III.10 aus der Klemmstellung bewegt.

Im Gehäuse III.21 ist in einer Ausnehmung III.21 eine drehbewegliche Vorrichtung III.21" als Durchflusssperre und Ablassvorrichtung III.68 für das Medium angeordnet. Diese besteht aus den Teilen III.69, III.70, III.71, III.73 und den Dichtungsringen III.66. Damit kann der Mediumdurchflusskanal III.67 geöffnet und geschlossen sowie bei Rückstau das Medium durch den Abfluss III.71 abgelassen werden.

Die Ausführungsform Fig.4 besteht aus dem Gehäuse IV.1, den darin angeordneten Kammer IV.3 mit konischförmigen Abschnitt IV.4 an den sich ein einen Austritt bildender Abschnitt IV.5 mit zylindrischer Bohrung anschliesst in dem ein ringförmiges Klemmstück IV.6 einschiebbar ist. Das Klemmstück IV.6 besteht aus dem Betätigungsteil IV.11, einem dünnwandigen Rohrabschnitt IV.7 mit über die äussere Mantelfläche umlaufenden verbreiterten Rand IV.8 und den den Rohrabschnitt IV.7 und den Rand IV.8 durchsetzenden Schlitzen IV.9 die federnde Zungen IV.10 abteilen. Der Durchmesser des Rohrabschnitts IV.7, zwischen dem Rand IV.8 und dem Betätigungsteil IV.11 entspricht dem Innendurchmesser des Kammerabschnitts IV.5 im Austrittsbereich des Gehäuses IV.1. In der Kammer IV.3 ist ein Dichtring IV.16 eingelegt, der das Gehäuse IV.1 gegenüber dem Rohr-Schlauch IV.2 abdichtet. Im Gehäuse IV.1 ist in einer Ausnehmung IV.12, IV.13 eine drehbewegliche Vorrichtung IV.68 als Durchflusssperre und Ablassvorrichtung für das Medium angeordnet. Diese besteht aus den Teilen IV.70, IV.71, IV.73 und den Dichtungsringen IV.66, IV.66. Mit dieser Vorrichtung kann der Mediumdurchflusskanal IV.67 geöffnet und geschlossen sowie bei Rückstau das Medium durch den Abfluss IV.71 abgelassen werden.

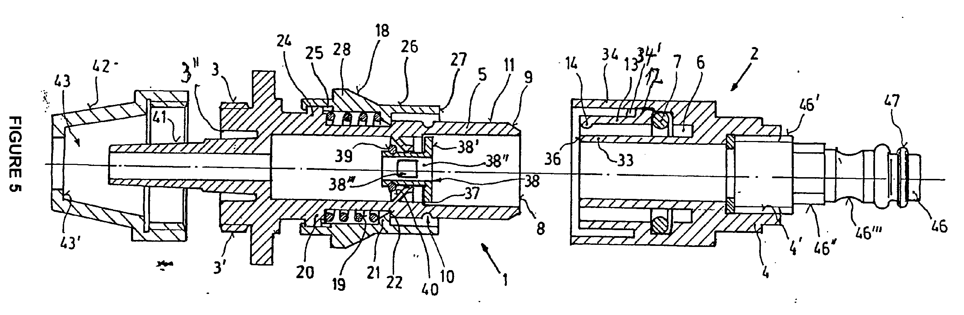

Die Ausführungsform Fig. 5 besteht aus den Gehäuseteilen V.1 und V.2 die miteinander verbindbar sind. Beide teile sind an ihren den Verbindungsenden entgegengesetzten Anschlussenden mit Anschlussfortsätzen V.3, V.4 zur Befestigung von Schläuchen versehen.

Am Teil V.1 ist eine Aufnahmebüchse V.3 mit Gewinde V.3'zum Aufschrauben einer Klemmmutter V.42 mit konisch verlaufender Hohlung V.433 und Rand V.43 sowie eine Ausnehmung V.3" und ein konische verlaufendes Rohrteil V.41 angeordnet. Das konisch verlaufende Rohrteil V.41 ermöglicht ein sicheres Festklemmen von Schläuchen mit abweichenden Innen und Aussendurchmesser.

Das Teil V.1 hat einen Steckfortsatz V.5 der in eine Aufnahmebüchse V.6 des Teiles V.2einsteckbar ist. Im Teil V.1 ist eine in axialer Richtung verschiebbare Ventileinrichtung V.38 so angeordnet, das ein öffnen des Ventils im Zusammengesteckten Zustand der Teile V.1 und V.2 und ein Schliessen des Ventils beim Auseinanderziehen der Teile V.1 und V2 erfolgt. Diese Funktion bewirkt ein im Teil V.2 angeordnetes Innenrohr V.33 mit der Kante V.36, die beim ZUsammenstecken der Teile V.1 und V.2 gegen die Anlagefläche V.38 des Ventilkörpers V.38 drückt, wodurch der Dichtring V.39 vom Bund V.40 im Teil V.1 soweit entfernt wird, dass ein Medium zwischen den Wandungen des Teiles V.1 und des Ventilkörpers V.38 und durch die im Ventilkörperkörper vorgesehenen Durchbrüche V.38" fliessen kann. Beim Auseinanderziehen der Teile V.1 und V.2 wird durch den Druck des Mediums das ventil wieder in Schliessstellung gedrückt und der Mediumfluss gestopt.

Im Teil V.2 ist eine Aufnahmebüchse V.6 für den Steckfortsatz V.5 des Teil V.1 und ein O-Ring zur Abdichtung gegen den Steckfortsatz angeordnet. Eine Schrägfläche V.9 an der Steckfortsatz-Stirnkante V.8 erleichtert das Durchschieben durch den O-Ring V.7. In einem vorbestimmten Abstand von der Stirnkante V.8 ist in die Umfangfläche V.11 des Steckfortsatzes V.5 eine Umfangrille V.10 eingeformt. Im Teil V.2 erstrecken sich von der Aufnahmebüchse V.6 Klemmfinger V.13 an deren freien Vorderenden nach innen gerichtete Klemmnocken V.14, die genau in die Umfangrille V.10 des Steckfortsatzes V.5 passen. Die Klemmfinger V.13 sind elastische, so dass sie radial nach aussen gedrückt werden können. Der Abstand der Klemmnocken V.14 vom O-Ring V.7 ist etwas kleiner als der vorerwähnt vorbestimmte Abstand, so dass nach der Verriegelung der Klemmnocken V.14 mit der Umfangrille V.10 wobei der Steckfortsatz V.5 vom O-Ring V.7 umgeben wird. Am Teil V.4 des Teiles V.2 ist ein Gewinde V.4 für die Befestigung an einem Wasserhahn oder andere zu verbindende Elemente angeordnet. Der dargestellte Adapter 46 ist mit einem Gewinde V.46 einem Vielkant V.46" einer Umfangrille und einem Dichtungsring V.47 versehen und dient als Kupplungsteil mit anderen Kupplungsvorrichtungen oder als Verbindungsteil mit Schläuchen.

Auf dem Teil V.1 ist in einem Abstand hinter der Umfangrille 10-von der Stirnkante V.8 aus gesehen eine Sicherungshülse V.18 mit Druckfeder V.19, die sich mit einem Ende an einer Schulter V.20 abstützt und mit ihrem anderen Ende Ende am Bund V.21 der Sicherunghülse V.18 anliegt und so die Sicherungshülse in Ausgang-und der Entriegelungsstellung belastet. Der Bund V.21 schlägt dabei an die Schulter V.22 des Teiles V.1 an, womit die Sicherungshülse V.18 in dieser vordersten Stellung fixiert ist. Die Sicherungshülse V.18 ist noch mittels einiger auf dem Umfang des Teiles V.1 verteilter Längsrippen V.24, die in Innenlängsrillen V.25 der Sicherungshülse V.18 eingreifen, gegen radiale Verdrehung gesichert. Die sicherungshülse V.18 weist einen Hülsenmantel V.26 auf, dessen Stirnkante V.27 als Anschlagsrand ausgebildet ist.

Im Teil V.2ist ein äusserer Schutzmantel V.34 angeordnet der die Klemmfinger V.13 und auch die in Verriegelugsstellung stehende Sicherungshülse V.18 teilweise abdeckt. Innen weist der Schutzmantel V.34 einen Bund V.34 auf, der als Widerlager für den Klemmring V.12 und der Klemmfinger V.13 dient. Das Innenrohr V.33 dient als Führungsrohr und verhindert, dass der Steckfortsatz V.5 in Schrägstellung bzw. verkantet in die Aufnahmebüchse V.6 des Teiles V.2 eingeschoben werden kann.

Um die beiden Teile V.1 und V.2 entkuppeln zu können, wird mit einer Hand die Sicherungshülse V.18 zweckmessig an dem Greifwulst V.28 erfast und entgegen der Kraft der Feder V.19 zurückgeschoben, bis die Uberdeckung der Klemmfinger V.13 aufgehoben ist. Wird der Zug auf die beiden oder einem der Teile V.1 und V.2 forgesetzt, dann treten die Klemmnocken V.14 aus der Umfangrille V.10 aus und die beiden Teile können ganz getrennt werden.

Wie in Figuren 1,2 und 3 dargestellt und ersichtlich, wird durch den zentralen Rohrfortsatz 22 in Verbindung mit dem Rohr-Schlauch 2, dem Kanalabschnitt 12 und dem Dichtring 16 ein Labyrinth Dichtungssystem geschaffen. Dieses System bewirkt einen Druckabbau des bei einem Rückstau des durchfliessenden Medium entstehenden Druckes auf die Dichtungen 16 und die Umleitung des Mediums entlang dem Rohrfortsatz 22 und dem darauf aufgeschobenen Rohr-Schlauch 2 bis zum Ende des Kanalansatzes 12 und von da zwischen der Wand12 und der Rohr-Schlauchaussenwand bis zum Dichtring 16. Durch die Durchflusssperre mit Ablassvorrichtung 68 und das Ventil 38 ist ein gesichertes trennen und verbinden der einzelnen Verbindungsteile jeder Zeit möglich.

Die Erfindung ist nicht auf die dargestellten Ausführungsbeispiele beschränkt. Die erfingungsgemässe lösbare Klemm-und Verbindungsvorrichtung kann auch als Anschlussstück an Geräten, Bremstrommel bei Fahrzeugen, Pumpen, Flussigkeitsbehältern als Verbindung zur Anwendung kommen, wobei sie jeweils der Form derselben angepasst ist. Wenn es sich bei den dargestellten Ausführungsbeispielen um zylinderische Rohre handelt, so sollen dadurch andere Querschnittsformen, wie rechteckige, quadratische oder ovale nicht ausgeschlossen werden. Auch der Adapter ist nicht nur zum Aufschieben von Schläuchen, sondern auch zum Verbindung mit diesen oder Geräten vorgesehen, wobei dieser auch abgebogen oder mit einem Einschraubgewinde versehen sein kann. Deswerteren kann das Gehäuse auch in Form von Winkel-T-oder-Y-Form sein und statt einem O-Ring auch mehrere elastische Dichtungsmanschetten angeordnet sein. Auch die Durchflusssperre die Ablassvorrichtung und das Ventil können eine andere Form haben und angeordnet sein.

## Patentansprüche

1. Lösbare Klemm- und Verbindungsvorrichtung für Rohre, Schläuche, Stangen oder der gleichen, bestehend aus einem Gehäuserohrstück (I.21, II.21, III.21 IV.1, V.1), einem Rohrfortsatz (I.22, II.22, III. 22, V.5), einer Kammer (I.3, II.3, III. 3, IV. 3) Dichtungsringen (I.16, 16', II.16, 16', III.16, IV.16, V.7) , einem Klemmrohrstück (I.10, II.10, III.10, IV.6; V.12), einem Adapter (I.20, II.11, V.46), einer Mediumdurchflusssperre (I.60, II.60, II.21 ", IV.68, V.38), einer Ablassvorrichtung (III.71, IV.68), einer Ventileinrichtung (V.38) und einem Tragring (I.54, III.38) mit Entriegelungsteilen (I.11, III.37), **dadurch gekennzeichnet, dass** im Innern des Gehäuserohrstücks (I.21, II.21, III.21 IV.1, V.1) ein Rohrfortsatz (I.22, II.22, III.22, V.5), eine Kammer (I.3, II.3, III.3, VI. 3), ein Dichtungsring (I.16, 16', II.16, 16', III.16, IV.16, V.7), ein Klemmrohrstück (I.10, II.10, III.10, IV.6; V.12), eine Mediumdurchflusssperre (I.60, II.60, II.21", IV.68, V.38), eine Abflussvorrichtung (III.71, IV.68) sowie eine Ventileinrichtung (V.38) und am Gehäuserohrstück (I.21, II.21, III.21 IV.1, V.1), ein Adapter (I.20, II.11, V.46) und ein Tragring (I.54, III.38) mit Entriegelungsteilen (I.11, III.37) angeordnet sind.

2. Lösbare Verbindungsvorrichtung nach Anspruch 1, **dadurch gekennzeichnet, dass** der Außendurchmesser des Rohrfortsatzes (I.22, II.22, III. 22, V.5) dem Innendurchmesser der darauf aufzuschiebenden Rohre, Schläuche (I.2, II.2, II.2, IV.2) entspricht und die Außenfläche des Rohrfortsatzes (I.22, II.22, III. 22, V.5) als Widerlagerfläche für die federnden Zungen des Klemmrohrstücks (I-10, II.10, III.10, IV.6; V.12) vorgesehen sind.

3. Lösbare Verbindungsvorrichtung nach Anspruch 1 oder 2, **dadurch gekennzeichnet, dass** in der Kammer (I.3, II.3, III. 3, VI. 3) ein Einsatzstück (I.37, III.37), ein Klemmrohrstück (I.10, III.6) und ein Entriegelungsteil (I.11, III.37) verschiebbar und auf das Rohr, Schlauch (I.2, III.2) aufschiebbar angeordnet sind.

4. Lösbare Verbindungsvorrichtung nach Anspruch 1, 2 und 3, **dadurch gekennzeichnet, dass** das Klemmrohrstück (I.10, III.6) aus einem rohrförmigen Einsatzstück (I.37, III.37) mit Rand (IV.8), einem mit Schlitzen (IV.7) durchsetzten Ringteil (I.28, III.28) mit an die Wandung der Kammer (I.3, III.3) gerichteten Abkröpfungen (I.35, III.35) und in Richtung des Rohrfortsatzes (I.22, III.22) gerichteten federnden Zungen (I.10') besteht und mit einem Betätigungs- und Entriegelungsteil (I.11, III.37) in und aus der Klemmstellung bringbar ist.

5. Lösbare Verbindungsvorrichtung nach Anspruch 1, 2,3 und 4, **dadurch gekennzeichnet, dass** das Klemmrohrstück (IV.6) aus einem Betätigungsteil (IV.7), einem dünnwandigen Rohrabschnitt (IV.7) mit Schlitzen (IV.9) die federnde Zungen (IV.10) anteilen, sowie einem verbreiterten Rand (IV.8) besteht und mit einem Durchtrittskanal für Rohre, Schläuche (IV.2) versehen ist.

6. Lösbare Verbindungsvorrichtung nach Anspruch 1, **dadurch gekennzeichnet, dass** das Klemmrohrstück (II.10) mit einem Betätigungsteil (II.11), einer Ausnehmung (II.30), einem Rand (II.31), mit Segmenten (II.29) und einem Durchtrittskanal für den Rohrfortsatz (II.22) und Rohre, Schläuche (II.2) versehen ist.

7. Lösbare Verbindungsvorrichtung nach Anspruch 1, **dadurch gekennzeichnet, dass** im Gehäuserohrstück (V.1) eine Ventileinrichtung, bestehend aus einem Ventilkörper (V.38) mit Anschlagsfläche (V.38'), einer Ausnehmung (V.38"), Durchbrüchen (V.38"") und einem Dichtungsring (V.39) angeordnet sind.

8. Lösbare Verbindungsvorrichtung nach Anspruch 1, **dadurch gekennzeichnet, dass** in einer Ausnehmung (I.58) am Gehäuserohrteil (I.21) ein Tragring (I.51) mit Entriegelungsteilen (I.54, I.59) befestigt ist und mit den Entriegelungsteilen (I.54, I.59) das Betätigungsteil (I.11) das Klemmrohrstück (I.10) aus der Klemmstellung bringbar ist.

9. Lösbare Verbindungsvorrichtung nach Anspruch 1, **dadurch gekennzeichnet, dass** am Gehäuserohrstück (I.21, V.21) in einer Ausnehmung (I.4, V.21') ein Adapter (I.20, V.46) mit Gewinden (I.20", V.46) befestigt ist, die mit einem Vielkant (I.20', V46"), einer Umfangrille (I.20", V.46") und einem Dichtring (I.16", V.47) versehen sind und als Kupplungsteil mit Verbindungsteilen dienen.

10. Lösbare Verbindungsvorrichtung nach Anspruch 1, **dadurch gekennzeichnet, dass** am Gehäuserohrstück (V.1) ein Rohrteil (V.41) eine Aufnahmebuchse (V.3) mit Gewinde (V.3'), eine Klemmmutter (V.42), eine Umfangrille (V.10) für die Klemmfinger (V.14) eine Sicherungshülse (V.18 mit Druckfeder (19) zur Verbindung mit Schläuchen mit unterschiedlichem Durchmesser angeordnet ist.

## Claims

1. Detachable clamping and connecting device for pipes, hoses, rods and similar, comprising a tubular housing element (I.21, II.21, III.21, IV.1, V.1), a tubular extension element (I.22, II.22, III.22, V.5), a chamber (I.3, II.3, III.3, IV.3), sealing rings (I.16, 16', II.16, 16 ', III.16, IV.16, V.7), a tubular clamping element (I.10, II.10, III.10, IV.6; V.12), an adapter (I.20, II.11, V.46), a medium throughflow-blocking element (I.60, II.60, II.21", IV.68, V.38), a draining means (III.71, IV.68), a valve element (V.38) and a bearing ring (I.54, III.38) with releasing parts (I.11, III.37), **characterised in that** on the inside of the tubular housing element (I.21, II.21, III.21, IV.1, V.1) are disposed a tubular extension element (I.22, II.22, III.22, V.5), a chamber (I.3, II.3, III.3, IV.3), a sealing ring (I.16, 16', II.16, 16', III.16, IV.16, V.7), a tubular clamping element (I.10, II.10, III.10, IV.6; V.12), a medium-throughflow-blocking element (I.60, II.60, II.21", IV.68, V.38), a draining means (III.71, IV.68) and a valve element (V.38) and on the tubular housing element (I.21, II.21, III.21, IV.1, V.1) an adapter (I.20, II.11, V.46) and a bearing ring (I.54, III.38) with releasing parts (I.11, III.37).

2. Detachable connecting device in accordance with claim 1, **characterised in that** the outside diameter of the tubular extension element (I.22, II.22, III.22, V.5) matches the inside diameter of the pipes and hoses (I2, II.2 III.2, IV.2) to be fitted over it and the outer surface of the tubular extension element (I.22, II.22, III.22, V.5) is provided for as a surface for the spring-loaded prongs of the tubular clamping element (I.10, II.10, III.10, IV.6; V.12) to act against.

3. Detachable connecting device in accordance with claims 1 or 2, **characterised in that** in the chamber (I.3, II.3, III.3, VI.3) are disposed an insert (I.37, III.37), a tubular clamping element (I.10, III.6) and a releasing part (I.11, III.37) so that they can be displaced and slid onto the pipe or hose (I.2, III.2).

4. Detachable connecting device in accordance with claims 1, 2 and 3, **characterised in that that** the tubular clamping element (I.10, III.6) comprises a tubular insert (I.37, III.37) with an edge (IV.8), a ring part (I.28, III.28) with slits (IV.7) through it and with parts (I.35, III.35) bent outwards towards the walls of the chamber (I.3, III.3) and spring-loaded prongs (I.10') angled towards the tubular extension element (I.22, III.22) and an actuating and a releasing part (I.11, III.37) which can be moved into and out of the clamping position.

5. Detachable connecting device in accordance with claims 1, 2, 3 and 4, **characterised in that that** the tubular clamping element (IV.6) comprises an actuating part (IV.7), a thin-walled tubular portion (IV.7) with slits (IV.9) which form spring-loaded prongs (IV.10) and a broadened edge (IV.8) and is provided with a duct for pipes and hoses (IV.2).

6. Detachable connecting device in accordance with claim 1, **characterised in that** the tubular clamping element (II.10) is provided with an actuating part (II.11), a recess (II.30), an edge (II.3I), segments (I.29) and a duct for the tubular extension element (II.22) and pipes and hoses (II.2).

7. Detachable connecting device in accordance with claim 1, **characterised in that** in the tubular housing element (V.1) are disposed a valve element comprising a valve body (V.38) with a stop surface (V.38'), a recess (V.38"), through-holes (V.38"") and a sealing ring (V.39).

8. Detachable connecting device in accordance with claim 1, **characterised in that** in a recess (I.58) on the tubular housing element (I.21) is fastened a bearing ring (I.51) with releasing parts (I.54, I.59) and with the releasing parts (I.54, I.59) of the actuating part (I.11) the tubular clamping element (I.10) can be moved out of the clamping position.

9. Detachable connecting device in accordance with claim 1, **characterised in that** in a recess (I.4, V.21') on the tubular housing element (I.21, V.21) an adapter (I.20, V.46) is fastened by means of screw threads (I.20", V.46) which are provided with a polygonal portion (I.20', V46"), a circumferential groove (I.20", V.46") and a sealing ring (I.16", V.47) and are used as a coupling element with connecting parts.

10. Detachable connecting device in accordance with claim 1, **characterised in that** on the tubular housing element (V.1) are disposed a tubular part (V.41), a mounting sleeve (V.3) with a screw thread (V.3'), a clamping nut (V.42), a circumferential groove (V.10) for the clamping fingers (V.14), a locking sleeve (V.18) with a compression spring (19) for connection to hoses of different diameters.

## Revendications

1. Dispositif de serrage et de connexion amovible destiné à des tuyaux, des tuyaux flexibles, des barres ou similaires, comprenant une pièce tubulaire (I.21, II.21, III.21, IV.1, V.1) formant carter, un appendice tubulaire (I.22, II.22, III.22, V.5), une chambre (I.3, II.3, III.3, IV.3), des bagues d'étanchéité (I.16, 16', II.16, 16', III.16, IV.16, V.7), une pièce tubulaire de serrage (I.10, II.10, III.10, IV.6 ; V.12), un adaptateur (I.20, II.11, V.46), un dispositif (I.60, II.60, II.21", IV.68, V.3 8) faisant barrage à l'écoulement du fluide, un dispositif de purge (III.71, IV.68), un dispositif à vanne (V.38) et une bague support (I.54, III.38) avec des pièces de déverrouillage (I.11, III.37), **caractérisé en ce qu'**à l'intérieur de la pièce tubulaire (I.21, II.21, III.21, IV.1, V.1) formant carter sont agencés un appendice tubulaire (I.22, II.22, III.22, V.5), une chambre (I.3, I.3, III.3, IV.3), une bague d'étanchéité (I.16, 16', II.16, 16', III.16, IV.16, V.7), une pièce tubulaire de serrage (I.10, II.10, III.10, IV.6 ; V.12), un dispositif (I.60, II.60, II.21", IV.68, V.38) faisant barrage à l'écoulement du fluide, un dispositif d'écoulement (III.71, IV.68) ainsi qu'un dispositif à vanne (V.3 8) et, contre la pièce tubulaire (I.21, II.21, III.21, IV.1, V.1) faisant carter, un adaptateur (I.20, II.11, V.46) et une bague support (I.54, III.38) avec des pièces de déverrouillage (I.11, III.37).

2. Dispositif de connexion amovible selon la revendication 1, **caractérisé en ce que** le diamètre extérieur de l'appendice tubulaire (I.22, II.22, III.22, V.5) correspond au diamètre intérieur des tuyaux, tuyaux flexibles (I.2, II.2, III.2, IV.2) à enfiler dessus et **en ce que** la surface extérieure de l'appendice tubulaire (I.22, II.22, III.22, V.5) a été prévue comme surface servant de palier antagoniste aux languettes amortisseuses de la pièce tubulaire de serrage (I.10, II.10, III.10, IV.6; V.12).

3. Dispositif de connexion amovible selon la revendication 1 ou 2, **caractérisé en ce que** dans la chambre (I.3, II.3, III.3, VI.3) ont été agencés un insert (I.37, III.37), une pièce de serrage tubulaire (I.10, III.6) et une pièce de déverrouillage (I.11, III.37) déplaçable et enfilables sur le tuyau, le tuyau flexible (I.2, III.2).

4. Dispositif de connexion amovible selon les revendications 1, 2 et 3, **caractérisé en ce que** la pièce de serrage tubulaire (I.10, III.6) se compose d'un insert tubulaire (I.37, III.37) avec bord (IV.8), d'une pièce annulaire (I.28, III.28) traversée par des fentes (IV.7) avec des coudages (I.35, III.35) regardant la paroi de la chambre (I.3, III.3) et avec des languettes amortisseuses (I.10') regardant en direction de l'appendice tubulaire (I.22, III.22), et peut être amenée par une pièce d'actionnement et de déverrouillage (I.11, III.37) dans une position de serrage et hors de cette position.

5. Dispositif de connexion amovible selon les revendications 1, 2, 3 et 4, **caractérisé en ce que** la pièce tubulaire de serrage (IV.6) se compose d'une pièce d'actionnement (IV.7), d'un segment tubulaire (IV.7) à paroi mince avec fentes (IV.9) affectées à des languettes amortisseuses (IV.10), ainsi qu'avec une bordure élargie (IV.8) et un canal ouvrant passage à des tuyaux et tuyaux flexibles (IV.2).

6. Dispositif de serrage amovible selon la revendication 1, **caractérisé en ce que** la pièce de serrage tubulaire (II.10) est dotée d'une pièce d'actionnement (II.11), d'un évidement (II.30), d'un bord (II.31), avec des segments (II.29) et un canal ouvrant passage à l'appendice tubulaire (II.22) et aux tuyaux et tuyaux flexibles (II.2).

7. Dispositif de serrage amovible selon la revendication 1, **caractérisé en ce que** dans la pièce tubulaire (V.1) faisant carter un dispositif à vanne comprenant un corps (V.38) de vanne avec surface butée (V.38'), un évidement (V.38"), des orifices de passage (V.38"") et une bague d'étanchéité (V.39) ont été agencés.

8. Dispositif de serrage amovible selon la revendication 1, **caractérisé en ce que** dans un évidement (I.58) ménagé contre la pièce tubulaire (I.21) faisant carter a été fixée une bague support (I.51) avec pièces de déverrouillage (I.54, I.59) et qu'avec ces pièces de déverrouillage (I.54, I.59) il est possible d'amener la pièce d'actionnement (I.11) et la pièce tubulaire de bridage (I.10) hors de la position de bridage.

9. Dispositif de serrage amovible selon la revendication 1, **caractérisé en ce que** sur la pièce tubulaire (I.21, V.21) faisant carter a été fixé, dans un évidement (I.4, V.21'), un adaptateur (I.20, V.46) présentant des filetages (I.20", V.46) qui sont dotés d'un embout polygonal (I.20', V.46"), d'une gorge circonférentielle (I.20", V.46") et d'une bague d'étanchéité (I.16", V.47) et servent de pièce d'accouplement avec des pièces de jonction.

10. Dispositif de serrage amovible selon la revendication 1, **caractérisé en ce que** sur la pièce tubulaire (V.1) faisant carter ont été agencés une pièce tubulaire (V.41), une douille réceptacle (V.3) filetée (V.3'), un écrou de serrage (V.42), une rainure circonférentielle (V.10) pour les doigts de serrage (V.14), une douille de sécurisation (V.18) avec ressort de compression (V.19) pour établir la liaison avec des tuyaux flexibles présentant différents diamètres.
